# EUROPÄISCHE PATENTSCHRIFT

(11) **EP 2 983 962 B1**
(45) Veröffentlichungstag und Bekanntmachung des Hinweises auf die Patenterteilung: **07.06.2017**
(21) Anmeldenummer: 14716834.8
(22) Anmeldetag: 11.04.2014
(51) Int. Cl.: B62D 6/10, B62D 15/02

(54) **SENSORANORDNUNG AN EINER LENKSÄULE EINES KRAFTFAHRZEUGS**
SENSOR ARRANGEMENT ON A STEERING COLUMN OF A MOTOR VEHICLE
ARRANGEMENT DE CAPTEURS SUR UNE COLONNE DE DIRECTION DUN VEHICULE MOTORISÉ

(30) Priorität: 13.04.2013 DE 102013006378
(43) Veröffentlichungstag der Anmeldung: 17.02.2016
(73) Patentinhaber: Valeo Schalter und Sensoren GmbH, 74321 Bietigheim-Bissingen (DE)
(72) Erfinder: CIRILLO, Michael, 74722 Buchen (DE)
(74) Vertreter: Pothmann, Karsten
(86) Internationale Anmeldenummer: PCT/EP2014/057363
(87) Internationale Veröffentlichungsnummer: WO 2014/167090

(56) Entgegenhaltungen:
- EP-A2- 2 672 233
- US-A1- 2010 023 212
- Infineon Technologies Ag: "Volkswagen to Use Infineon Sensor Chip in Electric Power Steering Systems - Infineon Technologies", , 11. Januar 2011 (2011-01-11), XP055137888, Gefunden im Internet: URL:http://www.infineon.com/cms/en/corpora te/press/news/releases/2011/INFATV201101-0 16.html [gefunden am 2014-09-03]

## Beschreibung

Die Erfindung betrifft eine Sensoranordnung an einer Lenksäule eines Kraftfahrzeuges nach dem Oberbegriff des Anspruchs 1.

Aus der DE 10 2009 057 361 A1 ist eine Drehmomentsensoranordnung bekannt, die räumlich benachbart zu einem an der Lenksäule angeordneten Lenkstockschaltermodul angeordnet ist, um den Verdrahtungsaufwand gering zu halten.

Des Weiteren ist aus der US 2010/023212 A1 eine Sensoranordnung an der Lenksäule eines Kraftfahrzeugs bekannt, die mindestens zwei Sensoren zur redundanten Erfassung des auf die Lenksäule aufgebrachten Drehmoments und/oder zur Erfassung des Drehwinkels der Lenksäule umfasst. Die Sensoren der Sensoranordnung sind über elektrische Leitungen an eine Spannungsversorgung angeschlossen und jeder der Sensoren übermittelt über eine Signalleitung Daten an ein Steuergerät. Dabei werden Drehmoment und Drehwinkel mittels zwei getrennter Leitungen an das Steuergerät kommuniziert.

Der Erfindung liegt die Aufgabe zugrunde, eine Sensoranordnung an einer Lenksäule eines Kraftfahrzeuges derart auszubilden, dass der Verdrahtungsaufwand mit einem Steuergerät reduziert ist.

Die Aufgabe wird nach den Merkmalen des Anspruchs 1 gelöst.

Werden die Signalleitungen von zumindest zwei Sensoren über eine gemeinsame Datenleitung mit dem Steuergerät verbunden, kann eine Datenleitung eines Sensors zum Steuergerät eingespart werden. Jeder der Sensoren ist über die Datenleitung und die Signalleitung von dem Steuergerät einzeln anzusteuern, wobei auf ein Signal des Steuergerätes der jeweils angesprochene Sensor seine Daten über die Signalleitung und die Datenleitung an das Steuergerät ausgibt.

Vorteilhaft werden je zwei Sensoren über einen gemeinsamen Spannungsanschluss an eine Spannungsversorgung angeschlossen, so dass auch der Verdrahtungsaufwand für die Energieversorgung gesenkt ist.

Im Einzelfall kann es zweckmäßig sein, alle Sensoren der Sensoranordnung über nur eine Versorgungsleitung mit einer gemeinsamen Spannungsversorgung zu verbinden.

In Weiterbildung der Erfindung sind mehrere Drehmomentsensoren und mehrere Drehwinkelsensoren vorgesehen, wobei je ein Drehmomentsensor und ein Drehwinkelsensor über eine gemeinsame Datenleitung mit dem Steuergerät verbunden sind. Insbesondere wenn die Drehmomentsensoren und Drehwinkelsensoren redundant vorhanden sind, können die zum Steuergerät führenden Kabel so auf eine geringe Anzahl reduziert werden.

Um die Redundanz zu gewährleisten, sind vorteilhaft ein Drehmomentsensor und der ihm zugeordnete Drehwinkelsensor über einen gemeinsamen Spannungsanschluss mit der Spannungsversorgung verbunden. Jeweils ein Paar aus einem Drehmomentsensor und einem Drehwinkelsensor liegen so an voneinander getrennten Spannungsversorgungen.

Um die Anzahl der Kabel zwischen der Sensoranordnung und dem Steuergerät weiter zu minimieren, ist vorgesehen, alle Drehmomentsensoren und alle Drehwinkelsensoren über eine gemeinsame Datenleitung mit dem Steuergerät zu verbinden. Sind darüber hinaus alle Sensoren der Sensoranordnung über nur eine Versorgungsleitung mit einer gemeinsamen Spannungsversorgung verbunden, reduziert sich die Anzahl der Kabelverbindungen auf maximal drei.

In vorteilhafter Weiterbildung der Erfindung kommuniziert das Steuergerät mit den Sensoren über ein Short PWM Code Protokoll, über das in einfacher Weise die abzufragenden Sensoren angesprochen werden können. Hierzu ist vorgesehen, dass das Steuergerät über die unterschiedlichen zeitlichen Längen eines Low-Signals eines Trigger Impulses des Steuergerätes einen zugeordneten Sensor zur Datenausgabe ansteuert.

Vorteilhaft sind die Sensoren in einer gemeinsamen Baueinheit zusammengefasst, wobei die Baueinheit an der Lenksäule eines Kraftfahrzeugs angeordnet ist.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in schematischer Darstellung ein Sensormodul für die Lenksäule eines Kraftfahrzeugs,
- Fig. 2: in schematischer Darstellung eine Sensoranordnung zur Verwendung in einem Lenkmodul nach Fig. 1,
- Fig. 3: eine schematische Signalfolge eines Short PWM Code Protokolls,
- Fig. 4: eine schematische Darstellung einer Sensoranordnung gemäß Fig. 2 mit gemeinsamer Spannungsversorgung aller Sensoren,
- Fig. 5: eine schematische Darstellung einer Sensoranordnung gemäß Fig. 4 mit einer gemeinsamen Datenleitung für alle Sensoren,
- Fig. 6: eine schematische Darstellung einer Sensoranordnung aus redundanten Drehmomentsensoren mit gemeinsamer Spannungsversorgung und einem gemeinsamen Datenkanal.

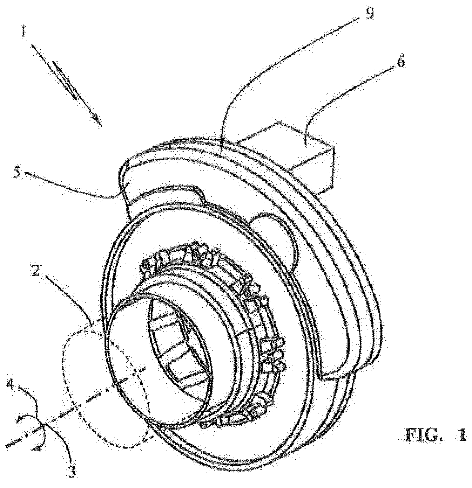

Das in Fig. 1 dargestellte Sensormodul 1 ist an einer strichliert dargestellten Lenksäule 2 eines Kraftfahrzeuges angeordnet und um eine Längsachse 3 in Richtung des Doppelpfeils 4 zu drehen. Das Sensormodul 1 umfasst eine Sensoranordnung 9, mit der das Drehmoment und/oder der Drehwinkel der Lenksäule 2 erfasst werden. Die Sensoranordnung 9 ist in einer Baueinheit 5 zusammengefasst, die Teil des Sensormoduls 1 ist. Über einen Steckanschluss 6 wird die Sensoranordnung 9 elektrisch mit einem Steuergerät 8 verbunden.

Im gezeigten Ausführungsbeispiel nach Fig. 1 besteht die Sensoranordnung 9 aus zwei Drehmomentsensoren 10 und 11 sowie zwei Drehwinkelsensoren 20 und 21. Die Sensoren 10, 11, 20 und 21 sind in einem Gehäuse der Baueinheit 5 der Sensoranordnung 9 aufgenommen, wobei zwei Drehmomentsensoren 10 und 11 auf einer gemeinsamen Platine 19 und zwei Drehwinkelsensoren 20 und 21 auf einer gemeinsamen Platine 29 angeordnet sind. Die Platinen 19 und 29 sind in der Baueinheit 5 mechanisch fixiert.

Jeder Sensor 10, 11, 20, 21 weist Spannungsanschlüsse 12, 14, 13, 15, 22, 24 und 23 und 25 sowie einen Signalanschluss für je eine Signalleitung 16, 17, 26, 27 auf.

Die Baueinheit 5 der Sensoranordnung 9 steht über Kabel 40 mit einem Steuergerät 8 in Verbindung, dem die Signale der Sensoren 10, 11, 20 und 21 zugeführt sind.

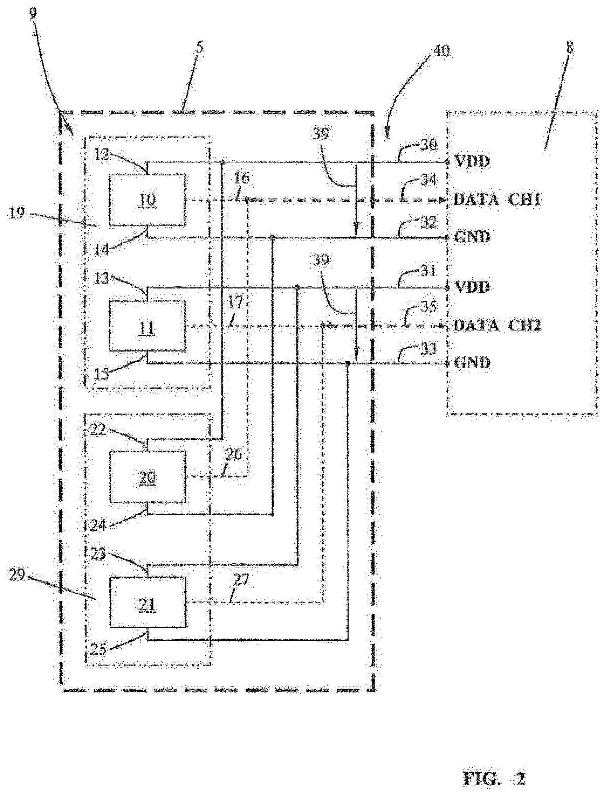

Wie Fig. 2 zeigt, ist die Spannungsversorgung des Drehwinkelsensors 20 mit der Spannungsversorgung 39 des Drehmomentsensors 10 gekoppelt. Hierzu ist der Spannungsanschluss 22 mit dem Spannungsanschluss 12 verbunden, so dass beide Spannungsanschlüsse 12 und 22 über eine gemeinsame elektrische Leitung 30 an einen Pol der externen Spannungsquelle VDD, vorzugsweise dem Pluspol der externen Spannungsquelle VDD angeschlossen sind. Entsprechend sind die Spannungsanschlüsse 14 und 24 der Sensoren 10 und 20 zusammengefasst und gemeinsam über die elektrische Leitung 32 mit dem Minuspol der Spannungsquelle VDD, bzw. deren Masse GND verbunden.

Die Signalleitung 26 des Drehwinkelsensors 20 ist mit der Signalleitung 16 des Drehmomentsensors 10 elektrisch verbunden; beide Signalleitungen 16 und 26 sind über eine gemeinsame Datenleitung 34 zwischen der Sensoranordnung 9 und dem Steuergerät 8 mit dem Steuergerät 8 zu einem Datenkanal DATA CH1 verbunden.

In entsprechender Weise sind die Signalleitungen 17 und 27 der Sensoren 11 und 21 miteinander verbunden und stehen über eine Datenleitung 35 als zweiten Datenkanal DATA CH2 mit dem Steuergerät 8 in Verbindung. Die elektrische Spannungsversorgung 39 des Drehwinkelsensors 21 ist in entsprechender Weise mit der elektrischen Spannungsversorgung des Drehmomentsensors 11 verbunden; die Anschlüsse 13 und 23 sind gemeinsam über die elektrische Leitung 31 mit der Spannungsquelle VDD verbunden. Die Spannungsanschlüsse 15 und 25 sind gemeinsam über die elektrische Leitung 32 mit dem anderen Pol der Spannungsquelle, insbesondere deren Masse GND verbunden.

Die Sensoranordnung 9 steht somit über lediglich sechs Kabel, nämlich den elektrischen Leitungen 30, 31, 32 und 33 der Spannungsversorgung 39 und den Datenleitungen 34 und 35 mit dem Steuergerät 8 in Verbindung.

Die Spannungsversorgung 39 der zueinander parallel geschalteten Sensoren 10 und 20 (Drehmomentsensor 10, Drehwinkelsensor 20) ist dabei unabhängig von der Spannungsversorgung 39 der parallel geschalteten Sensoren 11 und 21 (Drehmomentsensor 11, Drehwinkelsensor 21). Die Datenausgabe der zueinander parallel geschalteten Sensoren 10, 20; 11, 21 erfolgt über jeweils einen gemeinsamen Datenkanal, nämlich die Datenleitung 34 bzw. 35.

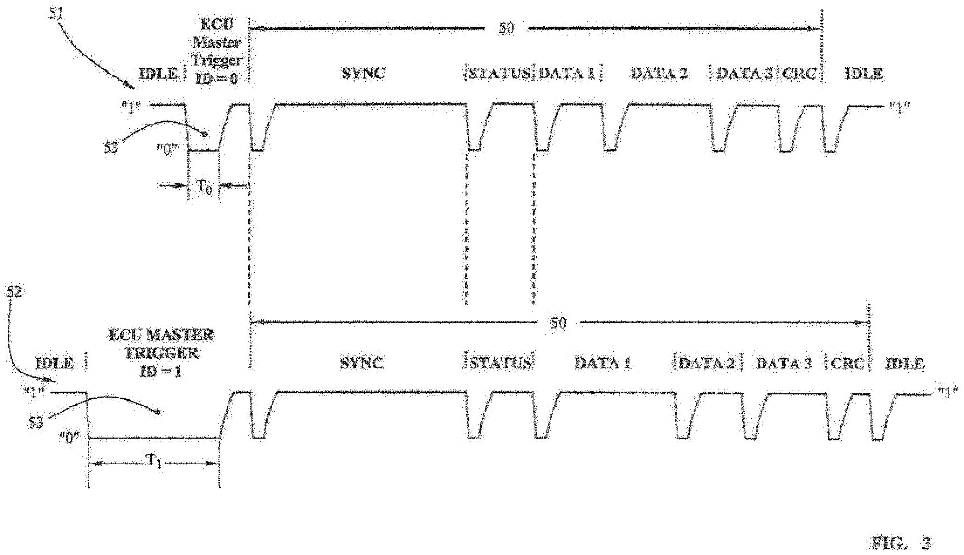

Die Kommunikation zwischen dem Steuergerät 8 und den jeweiligen Sensoren 10, 11, 20, 21 erfolgt über ein Short PWM Code (SPC) Protokoll, dessen Signalfolge beispielhaft in Fig. 3 wiedergegeben ist. Dargestellt sind zwei Signalfolgen 51 und 52, die jeweils einen Kommunikationsabschnitt 50 umfassen. Im Leerlauf des Systems liegt auf einer Datenleitung der Wert "1" an. Soll z. B. auf der Datenleitung 34 der Sensor 10 oder der Sensor 20 angesprochen werden, so wird im Leerlauf das Triggersignal des Steuergerätes 8 auf "Low" gesetzt. In Abhängigkeit der Zeitdauer T des "Low"-Signals 53 im Leerlauf wird entweder der eine Sensor 10 oder der andere Sensor 20 angesprochen. Im Ausführungsbeispiel nach Fig. 3 wird mit einer kurzen Zeitdauer T₀ der Drehmomentsensor 10 angesprochen, der darauf mit einem Synchronisationssignal SYNC antwortet und ein Statussignal abgibt. Daraufhin erfolgt die Ausgabe von Daten des Drehmomentsensors 10 in den Signalfolgen 51 und 52 mit den - im Ausführungsbeispiel - drei Datenblöcken DATA1, DATA2 und DATA3. Es können bis zu sechs Datenblöcke vorgesehen sein. Nach Übertragung der Daten sendet der Drehmomentsensor 10 noch eine CRC (Cyclic Redundancy Check); diese verwendet das Steuergerät 8, um die Datenintegrität der empfangenen Daten zu prüfen.

Soll über die gleiche Datenleitung 34 der Drehwinkelsensor 20 angesprochen werden, so wird vom Steuergerät 8 im Leerlauf ein Low-Signal 53 ausgegeben, dessen Zeitdauer T₁ größer, bevorzugt mehrfach größer als die Zeitdauer T₀ des Low-Signals 53 der Signalfolge 51 ist. Der Drehwinkelsensor 20 reagiert auf das Low-Signal 53 der Zeitdauer T₁ mit einem Synchronisationssignal SYNC und einem Statussignal, wonach - im gezeigten Ausführungsbeispiel - Daten in Datenblöcken DATA1, DATA2 und DATA3 an das Steuergerät 8 gesandt werden. Nach Übertragung der Daten sendet der Drehwinkelsensor 20 noch eine CRC; diese verwendet wiederum das Steuergerät 8, um die Datenintegrität der empfangenen Daten zu prüfen. Auf diese Weise kann vom Steuergerät 8 bei einer verminderten Anzahl von Kabeln bzw. elektrischen Verbindungsleitungen zwischen dem Steuergerät 8 und der Baueinheit 5 dennoch jeder einzelne Sensor angesprochen werden. Die Redundanz des Systems bleibt auch dadurch erhalten, dass die parallel geschalteten Sensoren 10, 20; 11, 21 voneinander unabhängige Spannungsversorgungen 39 haben.

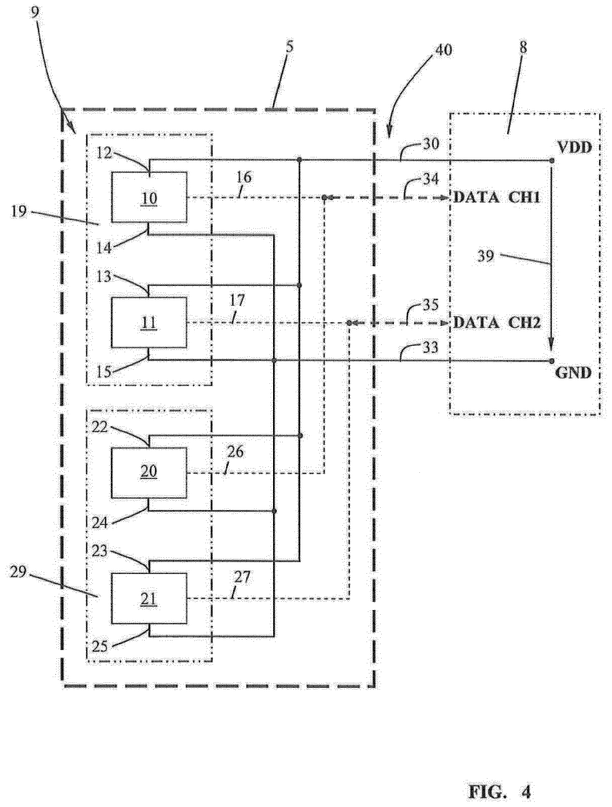

Das Ausführungsbeispiel nach Fig. 4 entspricht dem Grunde nach dem nach Fig. 2, weshalb für gleiche Teile gleiche Bezugszeichen verwendet sind. In Abweichung vom Ausführungsbeispiel nach Fig. 2 sind die Spannungsanschlüsse 12, 13, 22, 23 über die elektrische Leitung 30 einerseits und die Spannungsanschlüsse 14, 15, 24, 25 über die elektrische Leitung 33 gemeinsam an eine Spannungsversorgung 39 angeschlossen, nämlich die Spannungsquelle VDD. Die Datenleitungen 34 und 35 bilden wiederum zwei voneinander getrennte Datenkanäle DATA CH1 und DATA CH2.

Durch die gewählte gemeinsame Spannungsversorgung aller Sensoren der Sensoranordnung 9 bzw. der Baueinheit 5 kann die Anzahl von sechs Kabeln gemäß Fig. 2 auf vier Kabel gemäß Fig. 4 reduziert werden.

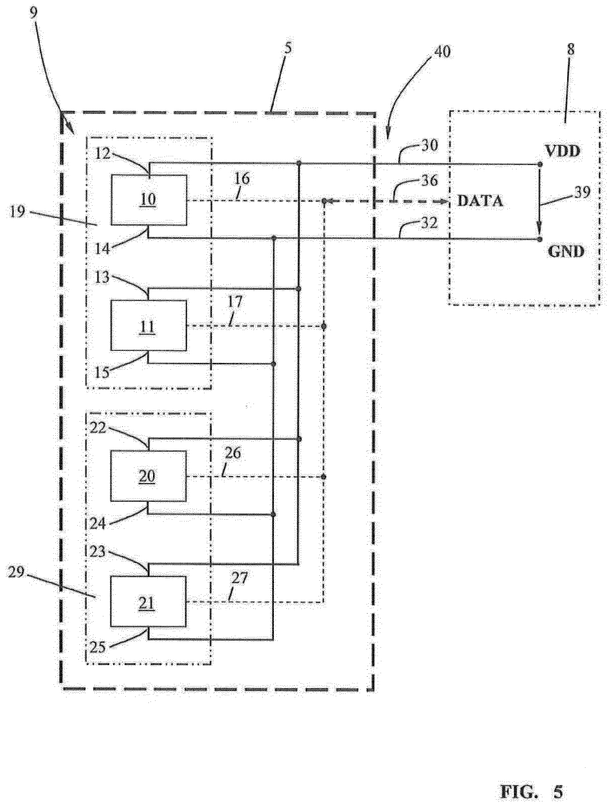

Eine weitere Reduktion der Verbindungskabel 40 zwischen dem Steuergerät 8 und der Sensoranordnung 9 bzw. der Baueinheit 5 ist in Fig. 5 wiedergegeben. Die Darstellung der Sensoranordnung 9 in Fig. 5 entspricht der nach Fig. 4, weshalb für gleiche Teile gleiche Bezugszeichen verwendet sind. In Abweichung von der Darstellung in Fig. 4 sind in Fig. 5 alle Signalleitungen 16, 17, 26, 27 miteinander verbunden und gehen über eine gemeinsame Datenleitung 36 zum Steuergerät 8 auf einem Datenkanal DATA. Bei dieser Zusammenschaltung der Sensoren 10, 11, 20, 21 sind nur noch drei Kabel zwischen dem Steuergerät 8 und der Sensoranordnung 9 bzw. der Baueinheit 5 notwendig. Das SPC Protokoll (Short PWM Code) kann im ID Selection Mode bis zu vier Sensoren über die Datenleitung 36 abfragen, wie dies in Fig. 5 dargestellt ist. Das Steuergerät 8 kann allein über die zeitliche Länge eines Low-Signals 53 des Master Trigger des Steuergerätes 8 entscheiden, welcher der angeschlossenen Sensoren 10, 11, 20, 21 auf der gemeinsamen Datenleitung 36 antworten soll. Das Steuergerät kann so sequenziell alle Sensoren 10, 11, 20, 21 über die gemeinsame Datenleitung 36 auslesen.

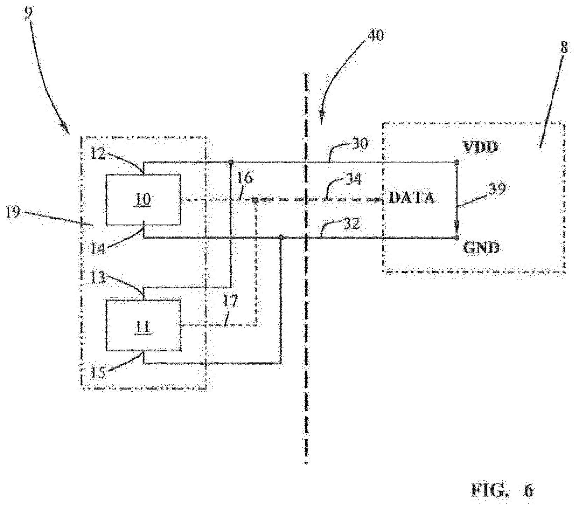

Im Ausführungsbeispiel nach Fig. 6 ist eine auf zwei Drehmomentsensoren 10, 11 reduzierte Sensoranordnung 9 dargestellt. Die Spannungsanschlüsse 12 und 13 einerseits und 14 und 15 andererseits der Sensoren 10 und 11 sind parallel geschaltet und über elektrische Leitungen 30 und 32 an eine gemeinsame Spannungsversorgung 39 angeschlossen. Die Signalleitungen 16 und 17 sind miteinander verbunden und kommunizieren über eine gemeinsame Datenleitung 34 als einzigen Datenkanal DATA mit einem externen Steuergerät 8.

## Patentansprüche

1. Sensoranordnung an einer Lenksäule (2) eines Kraftfahrzeugs, bestehend aus mindestens zwei Sensoren (10, 11, 20, 21) zur redundanten Erfassung des auf die Lenksäule (2) aufgebrachten Drehmomentes und/oder zur Erfassung des Drehwinkels der Lenksäule (2), wobei die Sensoren (10, 11, 20, 21) der Sensoranordnung (9) über elektrische Leitungen (30, 31, 32, 33) an eine Spannungsversorgung (VDD, GND) angeschlossen sind und jeder der Sensoren (10, 11, 20, 21) über eine Signalleitung (16, 17, 26, 27) Daten an ein Steuergerät (8) übermittelt,
**dadurch gekennzeichnet, dass** die Signalleitungen (16, 17, 26, 27) von zumindest zwei Sensoren (10, 11, 20, 21) über eine gemeinsame Datenleitung (34, 35, 36) mit dem Steuergerät (8) verbunden sind, und jeder Sensor (10, 11, 20, 21) über die Datenleitung (34, 35, 36) und die Signalleitung (16, 17, 26, 27) von dem Steuergerät (8) einzeln anzusteuern ist, derart, dass auf ein Signal (53) des Steuergerätes (8) der angesprochene Sensor (10, 11, 20, 21) seine Daten über die Signalleitung (16, 17, 26, 27) und die Datenleitung (34, 35, 36) an das Steuergerät (8) ausgibt.

2. Sensoranordnung nach Anspruch 1,
**dadurch gekennzeichnet, dass** je zwei Sensoren (10, 11, 20, 21) über einen gemeinsamen Spannungsanschluss (12, 13, 14, 15, 22, 23, 24, 25) an eine Spannungsversorgung (39) angeschlossen sind.

3. Sensoranordnung nach Anspruch 2,
**dadurch gekennzeichnet, dass** alle Sensoren (10, 11, 20, 21) der Sensoranordnung (9) über eine gemeinsame Versorgungsleitung mit einer gemeinsamen Spannungsversorgung (39) verbunden sind.

4. Sensoranordnung nach einem der Ansprüche 1 bis 3,
**dadurch gekennzeichnet, dass** mehrere Drehmomentsensoren (10, 11) und mehrere Drehwinkelsensoren (20, 21) vorgesehen sind und je ein Drehmomentsensor (10, 11) zusammen mit je einem Drehwinkelsensor (20, 21) über eine gemeinsame Datenleitung (34, 35, 36) mit dem Steuergerät (8) verbunden sind.

5. Sensoranordnung nach Anspruch 4,
**dadurch gekennzeichnet, dass** ein Drehmomentsensor (10, 11) und ein Drehwinkelsensor (20, 21) über einen gemeinsamen Spannungsanschluss (12, 13, 22, 23; 14, 15, 24, 25) mit der Spannungsversorgung (39) verbunden sind.

6. Sensoranordnung nach Anspruch 4 oder 5,
**dadurch gekennzeichnet, dass** alle Drehmomentsensoren (10, 11) und alle Drehwinkelsensoren (20, 21) über eine gemeinsame Datenleitung (36) mit dem Steuergerät (8) verbunden sind.

7. Sensoranordnung nach einem der Ansprüche 1 bis 6,
**dadurch gekennzeichnet, dass** das Steuergerät (8) mit den Sensoren (10, 11, 20, 21) über ein Short PWM Code Protokoll kommuniziert.

8. Sensoranordnung nach Anspruch 7,
**dadurch gekennzeichnet, dass** das Steuergerät (8) über die Zeitdauer (T₀, T₁) eines Low-Signals (53) eines Trigger Impulses einen Sensor (10, 11, 20, 21) zur Datenausgabe ansteuert.

9. Sensoranordnung nach einem der Ansprüche 1 bis 8,
**dadurch gekennzeichnet, dass** die Sensoren (10, 11, 20, 21) in einer gemeinsamen Baueinheit (5) zusammengefasst sind und die Baueinheit (5) an der Lenksäule (2) eines Kraftfahrzeugs angeordnet ist.

## Claims

1. Sensor arrangement on a steering column (2) of a motor vehicle, consisting of at least two sensors (10, 11, 20, 21) for redundant capture of the torque applied to the steering column (2) and/or for capture of the rotation angle of the steering column (2), wherein the sensors (10, 11, 20, 21) of the sensor arrangement (9) are connected to a power supply (VDD, GND) via electrical lines (30, 31, 32, 33) and each of the sensors (10, 11, 20, 21) transmits data to a controller (8) via a signal line (16, 17, 26, 27), **characterized in that** the signal lines (16, 17, 26, 27) from at least two sensors (10, 11, 20, 21) are connected to the controller (8) via a common data line (34, 35, 36), and each sensor (10, 11, 20, 21) can be individually actuated by the controller (8) via the data line (34, 35, 36) and the signal line (16, 17, 26, 27) such that a signal (53) from the controller (8) prompts the addressed sensor (10, 11, 20, 21) to output its data to the controller (8) via the signal line (16, 17, 26, 27) and the data line (34, 35, 36).

2. Sensor arrangement according to Claim 1, **characterized in that** two sensors (10, 11, 20, 21) in each case are connected to a power supply (39) via a common voltage connection (12, 13, 14, 15, 22, 23, 24, 25).

3. Sensor arrangement according to Claim 2, **characterized in that** all the sensors (10, 11, 20, 21) of the sensor arrangement (9) are connected to a common power supply (39) via a common supply line.

4. Sensor arrangement according to one of Claims 1 to 3,
**characterized in that** a plurality of torque sensors (10, 11) and a plurality of rotation angle sensors (20, 21) are provided and one torque sensor (10, 11) in each case together with one rotation angle sensor (20, 21) in each case are connected to the controller (8) via a common data line (34, 35, 36).

5. Sensor arrangement according to Claim 4, **characterized in that** a torque sensor (10, 11) and a rotation angle sensor (20, 21) are connected to the power supply (39) via a common voltage connection (12, 13, 22, 23; 14, 15, 24, 25).

6. Sensor arrangement according to Claim 4 or 5, **characterized in that** all the torque sensors (10, 11) and all the rotation angle sensors (20, 21) are connected to the controller (8) via a common data line (26).

7. Sensor arrangement according to one of Claims 1 to 6,
**characterized in that** the controller (8) communicates with the sensors (10, 11, 20, 21) using a Short PWM Code protocol.

8. Sensor arrangement according to Claim 7, **characterized in that** the controller (8) actuates a sensor (10, 11, 20, 21) for data output over the period (T₀, T₁) of a Low signal (53) of a trigger pulse.

9. Sensor arrangement according to one of Claims 1 to 8,
**characterized in that** the sensors (10, 11, 20, 21) are combined in a common modular unit (5) and the modular unit (5) is arranged on the steering column (2) of a motor vehicle.

## Revendications

1. Système de capteur sur une colonne de direction (2) d'un véhicule automobile, constitué d'au moins deux capteurs (10, 11, 20, 21) pour la détection redondante du couple de rotation appliqué à la colonne de direction (2) et/ou pour la détection de l'angle de rotation de la colonne de direction (2), dans lequel les capteurs (10, 11, 20, 21) du système de capteur (9) sont raccordés à une alimentation en tension (VDD, GND) par l'intermédiaire de lignes électriques (30, 31, 32, 33) et chacun des capteurs (10, 11, 20, 21) transmet des données à un appareil de commande (8) par l'intermédiaire d'une ligne de signal (16, 17, 26, 27), **caractérisé en ce que** les lignes de signal (16, 17, 26, 27) d'au moins deux capteurs (10, 11, 20, 21) sont connectées à l'appareil de commande (8) par l'intermédiaire d'une ligne de données commune (34, 35, 36), et **en ce que** chaque capteur (10, 11, 20, 23) est destiné à être commandé individuellement par l'appareil de commande (8) par l'intermédiaire de la ligne de données (34, 35, 36) et de la ligne de signal (16, 17, 26, 27) de manière à ce que le capteur (10, 11, 20, 21) interrogé délivre ses données à l'appareil de commande (8) lors de la réception d'un signal (53) de l'appareil de commande (8) par l'intermédiaire de la ligne de signal (16, 17, 26, 27) et de la ligne de données (34, 35, 36).

2. Système de capteur selon la revendication 1, **caractérisé en ce que** deux capteurs (10, 11, 20, 21) sont respectivement raccordés à une alimentation en tension (39) par l'intermédiaire d'une borne de tension commune (12, 13, 14, 15, 22, 23, 24, 25).

3. Système de capteur selon la revendication 2,
**caractérisé en ce que** tous les capteurs (10, 11, 20, 21) du système de capteur (9) sont connectés à une alimentation en tension commune (39) par l'intermédiaire d'une ligne d'alimentation commune.

4. Système de capteur selon l'une quelconque des revendications 1 à 3,
**caractérisé en ce qu'**il est prévu plusieurs capteurs de couple de rotation (10, 11) et plusieurs capteurs d'angle de rotation (20, 21) et **en ce qu'**un capteur de couple de rotation (10, 11), en association avec un capteur d'angle de rotation (20, 21) respectif, est connecté à l'appareil de commande (8) par l'intermédiaire d'une ligne de données (34, 35, 36).

5. Système de capteur selon la revendication 4,
**caractérisé en ce qu'**un capteur de couple de rotation (10, 11) et un capteur d'angle de rotation (20, 21) sont connectés à l'alimentation en tension (39) par l'intermédiaire d'une borne de tension commune (12, 13, 22, 23 ; 14, 15, 24, 25).

6. Système de capteur selon la revendication 4 ou 5,
**caractérisé en ce que** tous les capteurs de couple de rotation (10, 11) et tous les capteurs d'angle de rotation (20, 21) sont connectés à l'appareil de commande (8) par l'intermédiaire d'une ligne de données commune (36).

7. Système de capteur selon l'une quelconque des revendications 1 à 6,
**caractérisé en ce que** l'appareil de commande (8) communique avec les capteurs (10, 11, 20, 21) par l'intermédiaire d'un protocole à code PWM court.

8. Système de capteur selon la revendication 7,
**caractérisé en ce que** l'appareil de commande (8) commande un capteur (10, 11, 20, 21) pour la fourniture de données sur une période (T₀, T₁) d'un signal au niveau bas (53) d'une impulsion de déclenchement.

9. Système de capteur selon l'une quelconque des revendications 1 à 8,
**caractérisé en ce que** les capteurs (10, 11, 20, 21) sont regroupés dans une unité modulaire (5) et **en ce que** l'unité modulaire (5) est disposée sur la colonne de direction (2) d'un véhicule automobile.
